# EUROPÄISCHE PATENTSCHRIFT

(11) **EP 1 030 727 B1**
(45) Veröffentlichungstag und Bekanntmachung des Hinweises auf die Patenterteilung: **19.12.2001**
(21) Anmeldenummer: 98961159.5
(22) Anmeldetag: 09.11.1998
(51) Int. Cl.: A63B 69/00

(54) **TRAININGSVORRICHTUNG**
TRAINING DEVICE
APPAREIL D'ENTRAINEMENT

(30) Priorität: 13.11.1997 DE 29720110 U
(43) Veröffentlichungstag der Anmeldung: 30.08.2000
(73) Patentinhaber: Wittenbecher, Rainer, 22397 Hamburg (DE)
(72) Erfinder: Wittenbecher, Rainer, 22397 Hamburg (DE)
(74) Vertreter: Richter, Joachim, Dipl.-Ing.
(86) Internationale Anmeldenummer: EP9807135
(87) Internationale Veröffentlichungsnummer: WO9925430

(56) Entgegenhaltungen:
- WO-A-92/12768
- WO-A-97/29814
- US-A- 4 891 748
- US-A- 5 577 981

## Beschreibung

Die Erfindung betrifft eine Trainingsvorrichtung zum Trainieren des Bewegungsablaufes einer Person bei der Handhabung eines von der Person in vorbestimmter Weise zu bewegenden Gegenstandes, gemäß dem Oberbegriff des Anspruchs 1.

Bei allen Betätigungen eines Gegenstandes durch eine Person, beispielsweise eines Tennisschlägers durch einen Tennisspieler, eines Ballschlägers durch einen Ballspieler oder einer Verteidigungswaffe durch einen Angegriffenen, kommt es wesentlich darauf an, einen optimalen Bewegungsablauf von Körper und Gegenstand zu erzielen, um mit minimalem Aufwand und minimalen körperlichen Einsatz einen maximalen Effekt, wie beispielsweise maximale Ballgeschwindigkeit oder maximale Kraftübertragung auf einen Angreifer, zu erzielen.

Hierbei ergibt sich das Problem, daß dieser optimale Bewegungsablauf mühsam und durch langwieriges und wiederholtes Training zu erlernen und zu üben ist. Dieses Problem soll nachfolgend beispielhaft in Bezug auf einen Tennisspieler erörtert werden, jedoch betrifft es ganz allgemein alle Betätigungen eines Gegenstandes durch eine Person, beispielsweise bei Ballsportarten, bei denen mit einem Ballschläger auf einen Ball in vorbestimmter Weise einzuwirken ist oder bei denen mit einem gleitendem oder rollendem Sportgerät, wie Skier, Skateboards, Inlineskates, Snowboard etc. eine kontrollierte Fahr-, Roll- oder Gleitbewegung auszuführen ist.

Es ist zu beachten, daß ein durchschnittlicher Tennisspieler relativ schlecht spielt, das Tennistraining langwierig, teuer und frustrierend ist, viele Schüler deswegen die Lust verlieren und die Möglichkeiten des Tennisspiels auch von Profis aus Unkenntnis bestimmter Schlagvarianten und Schlagoptima nicht ausgenutzt werden.

Der Trainingsfortschritt eines traditionell durchgeführten Trainings ist u.a. deswegen so gering oder mühsam, weil der Schüler den "idealen Bewegungsablauf" eines bestimmten Schlages, z.B. des Aufschlags beim Tennis. nicht kennt.

Unter "ideal" soll dabei ein Schlag verstanden werden, bei dem der gesamte Bewegungsablauf optimal auf die persönlichen anthropometrischen Maße und kinematischen Eigenschaften des Spielers abgestimmt ist, so daß mit minimalem Energieaufwand die höchstmögliche Präzision und Energie des gewünschten Schlages erreicht wird, z.B. dahingehend, den Ball auf maximale Geschwindigkeit zu bringen und auf vorgegebener Flugbahn genau auf einen bestimmten Punkt auf dem Spielfeld des Gegners zu plazieren.

Der Schüler kann zwar seinen leiblichen Trainer z.B. beim Aufschlag beobachten und daraus lernen. Die Frage ist aber, ob der Trainer selbst den Schlag "ideal" ausführt oder sich, der besonderen Kinematik des eigenen Körpers entsprechend, eine bestimmte Bewegungsabfolge antrainiert hat, die vom Schüler auf Grund seiner eigenen persönlichen anthropometrischen Maße und kinematischen Eigenschaften nicht nachvollzogen werden kann. Auch dann, wenn der Trainerschlag nahezu ideal ausfällt, ist die Bewegungsabfolge so schnell und so komplex, daß der Schüler sie kaum wahrnehmen, geschweige denn in einen eigenen optimalen Bewegungsablauf umsetzen kann.

In Folge davon beginnt der Schüler, sich nach dem Prinzip "try and error" an einen Bewegungsablauf heranzutasten, der ihm nach einiger Zeit einen gewissen Erfolg beschert und daher "einprogrammiert" wird. Wenn der Schüler sehr talentiert ist, viel Glück hat oder sich viele Trainerstunden leisten kann, nähert sich dieser einprogrammierte Bewegungsablauf im Laufe der Zeit vielleicht dem "idealen" Ablauf. Möglicherweise ist die Bewegungsabfolge aber falsch, gesundheitsschädlich oder zumindest ungünstig und führt in die Sackgasse eines uneffizienten Spiels, aus die der Schüler kaum wieder herausfindet, weil er nicht weiß, was er anders machen muß und weil der einprogrammierte Bewegungsablauf bereits eine gewisse "Automatik" erreicht hat, die kaum noch zu korrigieren ist.

Sehr bald wird der Schüler "seine Grenzen" erkennen und die Lust am Tennis verlieren, da er höchst mittelmäßig spielt, keinen Fortschritt mehr macht oder aber der kleinste Fortschritt mit einem großen Aufwand an Zeit und Geld erkauft werden muß. Er gibt auf, mit vielleicht negativen Folgen für seine Gesundheit und für die Freizeitindustrie.

Aus der WO 97/29814 ist ein Gerät und ein Verfahren zum Training motorischer Fertigkeiten bekannt, welches auf der Nachahmung einer Bewegung eines menschlichen Trainers durch einen Studenten beruht. Die Bewegung des Trainers wird durch Sensoren erfasst, durch einen Computer digitalisiert und dann in einem Speicher gespeichert. Der Computer erzeugt auf dem Computerdisplay eine virtuelle Bildfolge des Trainers, der in der virtuellen Umgebung handelt, damit der Student dies sieht und nachahmt. Dieselbe Vorrichtung, die zur Aufnahme der Bewegung des Trainers verwendet wird, erfasst anschließend die Bewegungen des Studenten, und der Computer erzeugt eine virtuelle Bildfolge auf dem Display, die den Bewegungen des Studenten und ihrer Wechselwirkung mit der virtuellen Umgebung entspricht, und liefert gleichzeitig eine Bildfolge der Bewegungen des Trainers. Die Aufgabe des Studenten besteht darin, die Bewegung des Trainers nachzuahmen. Nachteilig bei diesem System ist, dass der Schüler nur anhand der fest vorgegebenen Bewegungen des Trainers lernen kann. Es erfolgt weder eine Anpassung der vorgegebenen Bewegungen an die individuellen biometrischen Daten des Schülers, noch ist eine flexible Abwandlung der Trainingssituationen möglich. Ferner kann der Schüler einen Vergleich der Soll und Ist-Bewegunger nur nachträglich durch einen Blick auf das Computerdisplay ausüben, d.h. nicht während er selbst die zu lernende Bewegung ausübt.

Weiterhin ist aus der US 5,577,981 eine Computer-gesteuerte Übungsmaschine bekannt, welche dem Benutzer erlaubt, seine eigenen Hände und Teile der Übungsmaschine einem vom Computer erzeugten Bild von simulierten Gegenständen überlagert zu sehen. Der Benutzer kann merkliche physische Anstrengung durch Anwendung von Kräften auf die Maschine ausführen, während er Bilder auf einem am Kopf angebrachten Display sieht. Die Übungsmaschine wird jedoch für eine Kombination mit Elementen der virtuellen Realität für ungeeignet gehalten, und sie enthält keine Elemente, die einen Vergleich mit einer idealen Bewegungsfolge des Benutzers erlauben.

### Aufgabe, Lösung, Vorteil

Es ist Aufgabe der vorliegenden Erfindung, eine Trainingsvorrichtung der obengenannten Art zur Verfügung zu stellen, welche die obengenannten Nachteile beseitigt und ein effektives und gleichzeitig kostengünstiges Training eines Bewegungsablaufes beim Handhaben eines Gegenstandes ermöglicht.

Diese Aufgabe wird durch eine Trainingsvorrichtung der o. g. Art mit den in Anspruch 1 gekennzeichneten Merkmalen gelöst.

Dabei ist die Trainingsvorrichtung erfindungsgemäß gekennzeichnet durch
- eine Datenverarbeitungsanlage,
- mit der Datenverarbeitungsanlage verbundene und an der Person angeordnete erste Sensoren, welche erste Daten bezüglich der Bewegung der Person an die Datenverarbeitungsanlage übermitteln,
- mit der Datenverarbeitungsanlage verbundene und am Gegenstand angeordnete zweite Sensoren, welche zweite Daten bezüglich der Bewegung des Gegenstandes an die Datenverarbeitungsanlage übermitteln,
- mit der Datenverarbeitungsanlage verbundene und am Gegenstand angeordnete mechanische Betätigungsmittel, welche von der Datenverarbeitungsanlage angesteuert betätigt eine Berührung mit einem virtuellen Gegenstand als taktile Rückmeldung an die Person simulieren,
- ein mit der Datenverarbeitungsanlage verbundenes und an der Person angeordnetes Anzeigemittel und
- einen Speicher für Referenzdaten,
wobei die Datenverarbeitungsanlage derart ausgebildet ist, daß sie aus den Referenzdaten einen idealen Bewegungsablauf von Körper und Gegenstand errechnet und wahlweise
(a) den idealen Bewegungsablauf im Anzeigemittel darstellt oder
(b) den idealen Bewegungsablauf mit einem tatsächlichen Bewegungsablauf vergleicht, welcher sich aus den ersten und zweiten Daten der ersten und zweiten Sensoren ergibt, oder
(c) gleichzeitig den idealen Bewegungsablauf und den mittels der ersten und zweiten Sensoren detektierten tatsächlichen Bewegungsablauf im Anzeigemittel darstellt.

Dies hat den Vorteil, daß ein größtmöglicher Fortschritt und Trainingserfolg dadurch erzielt wird, daß die Person von Beginn an einen idealen Bewegungsablauf kennenlernt und diesen beliebig langsam, beliebig häufig und aus beliebigen Blickwinkeln beobachten kann. Bei einem Vergleich des idealen Bewegungsablaufes mit einem tatsächlich durchgeführten kann die Datenverarbeitungsanlage unmittelbar Hinweise zur Verbesserung und für ein weiteres Training geben, wie dies in dieser Präzision und Objektivität kein menschlicher Trainer könnte. Durch den visuellen Vergleich des tatsächlich ausgeführten Bewegungsablaufes mit dem von der Datenverarbeitungsanlage errechneten idealen Bewegungsablauf erkennt die Person sofort eigene Fehler und kann diese beseitigen. Von Beginn an vollführt die Person bzw. der Schüler einen persönlich bestmöglichen Bewegungsablauf und programmiert sich diesen ein, wobei jede Abweichung sofort bemerkt und eigenständig korregierbar ist. Der Trainingsfortschritt und damit der motivierenden Trainingserfolg sind somit besonders groß.

Vorzugsweise Weitergestaltungen der Vorrichtung sind in den Ansprüchen 2 bis 16 beschrieben.

So ergibt sich eine besonders realistische Darstellung, wenn die Datenverarbeitungsanlage ferner derart ausgebildet ist, daß sie aus den Referenzdaten und den ersten und zweiten Daten eine Bewegungstrajektorie des zweiten Gegenstandes im Raum errechnet und auf dem Anzeigemittel darstellt.

In einer bevorzugten Ausführungsform der Erfindung ist der Gegenstand ein Sportgerät, z.B. ein Tennisschläger, ein Badmintonschläger, ein Tischtennisschläger, ein Squashschläger, ein Golfschläger, ein Baseballschläger, ein Wurfhammer, ein Hockeyschläger, ein Ballschläger, ein Speer oder ähnliches oder Skier, Schlittschuhe, Snowboards, Inlineskates, Skateboards oder ähnliches, oder ein Schwert, ein Schläger, ein Degen, ein Florett, eine Axt, eine Verteidigungswaffe oder ähnliches.

In einer realistischen Simulation ist der virtuelle Gegenstand z.B. ein Ball oder eine virtuelle Person und/oder ein von der virtuellen Person geführter virtueller Gegenstand, oder ein Schneehang, die Trasse eines Funparks, der Parcour für Skateboards, Inlineskates etc.

Für eine optimale Datenerfassung als Berechnungsgrundlage für die Datenverarbeitungsanlage sind die ersten Sensoren Datenhandschuhe und/oder Datenschuhe.

Zweckmäßigerweise ist das Anzeigemittel ein Bildschirm.

in einer vorteilhaften Weiterbildung der Erfindung ist das Anzeigemittel in einem am Kopf der Person angeordneten Helm oder Haube integriert (z.B. Cyberspacemaske oder Cyberspacehelm).

Zum Erhalten eines Urmusters oder Referenzmusters eines idealen Bewegungsablaufes umfassen die Referenzdaten anthropometrische Maße und/oder kinematische Parameter des Körpers einer Durchschnittsperson und der ideale Bewegungsablauf ist auf der Grundlage dieser Daten bestimmt.

Die Person kann den idealen Schlag an sich selbst beobachten und einen weiter verbesserten Trainingserfolg dadurch erzielen, daß die Referenzdaten anthropometrische Maße und/oder kinematische Parameter der Person umfassen und der persönlich ideale Bewegungsablauf auf der Grundlage dieser Daten bestimmt ist.

Zweckmäßigerweise umfassen die Referenzdaten statische und dynamische Eigenschaften des Gegenstandes wie Steifigkeit und Größe eines Tennisschlägers, sowie ggf. Maße eines Spielfeldes, die Netzhöhe, die Netzbreite, die Oberflächenbeschaffenheit eines Platzes, wie beispielsweise Sand, Rasen oder Teppich, und/oder weitere Parameter.

Sofortige und präzise Hinweise für das Training ergeben sich dadurch, daß im Fall (b) die Datenverarbeitungsanlage derart ausgebildet ist, daß aus dem Vergleich der Bewegungsabläufe Daten hervorgehen, welche den Abweichungen zwischen den idealen und dem tatsächlichen Bewegungsabläufen entsprechen.

Weitere Hinweise auf Fehler im tatsächlich durchgeführten Bewegungsablauf erkennt die Person auf einfache und schnelle Weise dadurch, daß im Fall (c) die Datenverarbeitungsanlage derart ausgebildet ist, daß Abweichungen des von den ersten und zweiten Sensoren erfaßten tatsächlichen Bewegungsablaufes vom idealen Bewegungsablauf in der Anzeigevorrichtung beispielsweise farblich hervorgehoben sind.

Eine anschauliche und realitätsnahe Darstellung eines virtuellen Gegenstandes erzielt man dadurch, daß zwei mit der Datenverarbeitungsanlage verbundene und von dieser gesteuerte Laser vorgesehen sind, deren Kreuzungspunkt ihrer Laserstrahlen dem Ort im Raum des zweiten Gegenstandes entsprechen.

Zweckmäßigerweise sind mehrere virtuelle Gegenstände vorgesehen, wobei jedem virtuellen Gegenstand zwei Laserstrahlen zugeordnet sind und der jeweilige Kreuzungspunkt zweier Laserstrahlen einem Ort im Raum des jeweiligen virtuellen Gegenstandes entsprechen.

### Kurzbeschreibung der Zeichnung

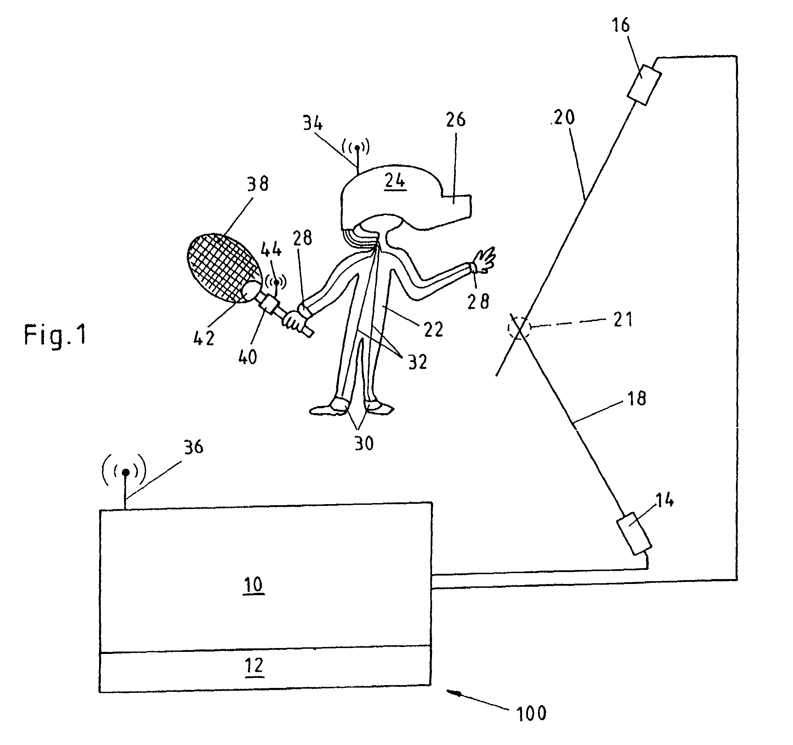

Nachstehend wird die Erfindung anhand der beigefügten Zeichnung in Fig. 1 näher erläutert. Diese zeigt eine bevorzugte Ausführungsform einer erfindungsgemäßen Trainingsvorrichtung in schematischer Darstellung.

### Detaillierte Beschreibung der Erfindung und bester Weg zum Ausführen der Erfindung.

Die erfindungsgemäße Vorrichtung ist überall dort einsetzbar, wo mit dem Körper ein Gegenstand, wie beispielsweise ein Sportgerät oder eine Kampf- bzw. Verteidigungswaffe, in einer bestimmten Weise zu bewegen ist, wobei nur ein bestimmter optimaler Bewegungsablauf von Körper und Gegenstand zu dem gewünschten Erfolg führt. Beispielhaft wird die Vorrichtung nachfolgend in Bezug auf einen Tennisschläger beschrieben. Hierbei steht jedoch der Begriff "Tennisschläger" synonym für jeden beliebigen mit dem Körper zu bewegenden Gegenstand, wie einen Badmintonschläger, einen Tischtennisschläger, einen Squashschläger, einen Golfschläger, einen Baseballschläger, einen Wurfhammer, einen Hockeyschläger, einen Ballschläger, ein Schwert, einen Degen, ein Florett, eine Axt, Skier, Skateboards, Inlineskates oder dergleichen.

Die in der Figur dargestellte bevorzugte Ausführungsform einer erfindungsgemäßen Trainingsvorrichtung 100 umfaßt eine Datenverarbeitungsanlage 10 mit einem Speicher 12 für Referenzdaten und zwei von der Datenverarbeitungsanlage gesteuerte Laserkanonen 14 und 16, welche jeweils einen Laserstrahl 18 und 20 aussenden. Der Kreuzungs- und der jeweilige Kreuzungspunkt zweier Laserstrahlen einem Ort im Raum des jeweiligen virtuellen Gegenstandes entsprechen.

### Kurzbeschreibung der Zeichnung

Nachstehend wird die Erfindung anhand der beigefügten Zeichnung in Fig. 1 näher erläutert. Diese zeigt eine bevorzugte Ausführungsform einer erfindungsgemäßen Trainingsvorrichtung in schematischer Darstellung.

### Detaillierte Beschreibung der Erfindung und bester Weg zum Ausführen der Erfindung.

Die erfindungsgemäße Vorrichtung ist überall dort einsetzbar, wo mit dem Körper ein Gegenstand, wie beispielsweise ein Sportgerät oder eine Kampf- bzw. Verteidigungswaffe, in einer bestimmten Weise zu bewegen ist, wobei nur ein bestimmter optimaler Bewegungsablauf von Körper und Gegenstand zu dem gewünschten Erfolg führt. Beispielhaft wird die Vorrichtung nachfolgend in Bezug auf einen Tennisschläger beschrieben. Hierbei steht jedoch der Begriff "Tennisschläger" synonym für jeden beliebigen mit dem Körper zu bewegenden Gegenstand, wie einen Badmintonschläger, einen Tischtennisschläger, einen Squashschläger, einen Golfschläger, einen Baseballschläger, einen Wurfhammer, einen Hockeyschläger, einen Ballschläger, ein Schwert, einen Degen, ein Florett, eine Axt, Skier, Skateboards, Inlineskates oder dergleichen.

Die in der Figur dargestellte bevorzugte Ausführungsform einer erfindungsgemäßen Trainingsvorrichtung 100 umfaßt eine Datenverarbeitungsanlage 10 mit einem Speicher 12 für Referenzdaten und zwei von der Datenverarbeitungsanlage gesteuerte Laserkanonen 14 und 16, welche jeweils einen Laserstrahl 18 und 20 aussenden. Der Kreuzungspunkt der Laserstrahlen 18 und 20 markiert einen Aufenthaltsort eines virtuellen Balles 21 im Raum.

An einer Person 22 sind ferner ein Helm 24 mit integriertem Anzeigemittel 26 und Sensoren 28 und 30 angeordnet. Die Sensoren 28 und 30 sind mittels Kabel 32 mit dem Helm 24 verbunden und dieser hat wiederum Kontakt mit der Datenverarbeitungsanlage 10 über eine Funkverbindung mittel der Antennen 34 und 36.

Über die Funkverbindung empfängt die Datenverarbeitungsanlage 10 Daten von den Sensoren 28, 30 und sendet Anzeigedaten an das Anzeigemittel 26. Dieses ist beispielsweise ein im Helm 24 integrierter Bildschirm, z.B. eine Cyberspacemask welche den Sichtbereich der Person 22 vollständig umschließt und ein Bild eines virtuellen Tennisplatzes liefert. Die Darstellung auf dem Anzeigemittel 26 wird von der Datenverarbeitungsanlage 10 ständig in Abhängigkeit von den Daten der Sensoren 28 und 30 aktualisiert, d.h. wenn sich die Person 22 bewegt verändert sich auch ihre Position auf dem im Anzeigemittel 26 dargestellten virtuellen Tennisplatz. Ferner stellt die Anzeigevorrichtung den virtuellen Ball 21 dar, wobei sich der virtuelle Ball 21 auf dem virtuellen Tennisplatz bezüglich der Person 22 am Kreuzungspunkt der Laserstrahlen befindet.

Ein von der Person gehaltener und bewegter Tennisschläger 38 umfaßt zusätzlich Sensoren 40 und mechanische Betätigungsmittel 42. Über eine Antenne 44 besteht eine weitere Funkverbindung zur Datenverarbeitungsanlage 10. Über diese Funkverbindung erhält die Datenverarbeitungsanlage 10 Daten von den Sensoren 40 und bestimmt damit eine Position des Tennisschlägers 38 im Raum. Ferner gibt die Datenverarbeitungsanlage 10 über die Funkverbindung Steuersignale an das mechanische Betätigungsmittel 42, welches einen Ballaufschlag auf den Tennisschläger 38 durch entsprechende mechanische Auslenkung desselben simuliert, so daß die Person 22 eine taktile Rückmeldung erhält.

Die oben erwähnten Funkverbindungen sind nur beispielhaft und es können auch andere Datenverbindungen zum Einsatz kommen, beispielsweise Glasfaserkabel, eine Infrarot- oder Ultraschallverbindung oder ähnliches.

In dem Hochleistungsrechner 10 werden die Maße des Spielfeldes, die Netzhöhe und -breite, die Oberflächenbeschaffenheit des Platzes (Sand, Rasen, Teppich etc.) und andere "ortsfeste" Parameter eingegeben.

Ferner werden die anthropometrischen Maße eines "virtuellen Durchschnittsathleten" eingespeichert, ebenso die "kinematischen" Parameter, d.h. die Beziehung bestimmter Körperpunkte zueinander (z.B. Schultergelenke, Ellenbogen, Hüftgelenke, Knie etc.) bei der Durchführung eines Bewegungsablaufes. Die Abhängigkeit der einzelnen Punkte zueinander wird im Algorithmen beschrieben, die im einfachsten Fall den virtuellen Athleten definieren als Feder-Masse-Dämpfer-System, mit der Möglichkeit, bestimmte Kenngrößen zu variieren, z.B. die der Feder- oder Dämpfungselemente.

Auch die statischen und dynamischen Eigenschaften des Tennisschlägers 38 und des virtuellen Balles 21 werden eingegeben, wie die Schlägergröße und -form, das Schwingungsverhalten und Steifigkeit des Schlägers 38, die Ballgröße und -härte, die Oberflächenbeschaffenheit des Balles 21 und andere Kenngrößen.

Die Bewegung des virtuellen Balles 21 wird vom Rechner 10 errechnet, im Fall des Hochwerfens des Balles 21 z.B. für den Aufschlag, durch Algorithmen, die eine ballistische Flugbahn beschreiben. Beim Abschlag des Balles 21 dagegen wird diese ballistische Flugbahn überlagert durch Algorithmen, durch welche die aerodynamischen und rotationskinetischen Eigenschaften des Balles 21 beschrieben werden. Die Parameter dazu erhält der Rechner 10 aus den eingegebenen Kenngrößen des Schlägers 38 und des Balles 21, sowie aus der Winkelstellung des Schlägers 38 beim Schlagen des Balles 21 (Spin) und der Auftreffgeschwindigkeit des Schlägers 38 auf den Ball 21.

Äußerlich sichtbar gemacht wird die jeweilige Position des Balles 21 durch die zwei Laserstrahlen 18 und 20, die sich in einem Punkt kreuzen. In genau diesem Kreuzpunkt befindet sich jeweils der Ball 21. Gesteuert werden die beiden "Laserkanonen" 14 und 16 durch die oben beschriebenen Algorithmen. Auf diese Weise lassen sich beliebige Bahnkurven des Balles 21 beschreiben und beliebige Fluggeschwindigkeiten des Balles 21 simulieren. In der Cyberspacemaske 24 jedoch sieht der Spieler 22 keine Laserstrahlen 18, 20, sondern einen virtuellen Tennisball 21 am jeweiligen Kreuzungspunkt der beiden Strahlen 18 und 20.

Beim Auftreten des Schlägers 38 auf den Ball 21 (Kreuzungspunkt der beiden Laserstrahlen 18, 20) erhält der Schläger 38 - und damit der Spieler 22 - über entsprechende Sensoren 40 und Mechaniken 42 auf dem Schläger 38 eine geschwindigkeitsabhängige taktile Rückmeldung mit dem Ergebnis, daß der Spieler 22 das Gefühl hat, mit einem echten Ball zu spielen. Unterschiedlich plazierte Sensoren 40 auf dem präparierten Schläger 38 geben darüber hinaus die Information, wo auf der Spielfläche des Schlägers 38 der "Ball" 21 aufgeschlagen hat. Diese ist notwendig, da die Abschlagcharakteristik des Balles 21 abhängig ist vom Treffpunkt auf dem Schläger 38. Zum anderen braucht der Spieler 22 eine taktile Rückmeldung, wo der Ball 21 auf dem Schläger 38 aufgetroffen ist.

Auf der Grundlage dieser Daten errechnet der Rechner 10, z.B. den Bewegungsablauf eines "idealen" Aufschlags für den virtuellen Athleten unter Berücksichtigung der oben erwähnten Parameter. Die dabei errechneten Algorithmen sind das "Urmuster", oder die "Referenz", im Rechner, mit dem alle "realen" Bewegungsabläufe verglichen werden.

Der Schüler 22 gibt seine anthropometrischen Maße in den Rechner 10 ein, sowie die Parameter seines Schlägers 38 und des Balles 21.

Ausgerüstet mit Datenhandschuhen 28 und Datenschuhen 30 führt der Schüler 22 standardisierte Bewegungsabläufe durch. Der Rechner 10 ermittelt daraus die persönlichen kinematischen Bewegungsmuster und Bewegungsmöglichkeiten des Schülers 22.

Auf der Grundlage dieser "realen" Daten berechnet der Rechner 10 den vorher am virtuellen Athleten errechneten idealen Bewegungsablauf (z.B. eines Aufschlags) um auf die athropometrischen und kinematischen Maße des konkreten Schülers 22 und stellt dessen Bewegung auf Verlangen virtuell dar.

Beim Training hat der Schüler 22 eine Cyberspacemaske 24 auf und trägt an Händen und Füßen Datenhandschuhe 28 und Datenschuhe 30, die seine Bewegungen digitalisieren und ständig in einen Rechner 10 eingeben.

**Im ersten Schritt** hat der Schüler 22 die Möglichkeit, sich in der Cyberspacemaske 24 seinen eigenen idealen Bewegungsablauf anzusehen. Dieser Ablauf wird vom Rechner 10 generiert auf der Basis des am virtuellen Athleten optimierten Ablaufs, umgerechnet auf die Daten des Schülers 22.

Bei der Durchführung eines Aufschlages sieht sich der Schüler 22 also selbst in der Cyberspacemaske 24 u.z. dreidimensional, d.h. er kann sich selbst von vorne, von hinten oder von der Seite beobachten. Er sieht sich selbst dabei einen idealen Aufschlag ausführen und kann sich dessen Bewegungsablauf genau einprägen, indem er sich seinen eigenen "idealen" Bewegungsablauf beliebig oft, beliebig langsam und von beliebigen Blickwinkeln aus betrachtet vorführen läßt.

**Im zweiten Schritt** führt der Schüler 22 einen tatsächlichen Aufschlag aus. Der Rechner 10 überlagert diesen tatsächlichen Bewegungsablauf des Schülers 22 mit seinem idealen Bewegungsablauf. Der Schüler 22 sieht sich selbst in der Cybermaske 24 doppelt in vitro: einmal einen tatsächenlichen Bewegungsablauf, zum anderen seinen idealen Bewegungsablauf, nach eigenem Wunsch entweder simultan ablaufend oder alternierend. Deutlich erkennt er den Unterschied zwischen SOLL- und IST-Ablauf. Die Abweichungen werden am Anfang erheblich sein, dem Schüler 22 aber visuell klar erkennbar machen, wo exakt die Abweichungen liegen.

**Im dritten Schritt** versucht der Schüler 22 nun, diese Abweichungen verschwinden zu lassen, d.h. seinen tatsächlichen Bewegungsablauf immer exakter seinem eigenen idealen Bewegungsablauf anzupassen. Der Fortschritt wird sehr schnell sein.

**Im vierten Schritt** sieht der Schüler 22 nur noch seinen tatsächlichen Bewegungsablauf, der dem idealen Ablauf bereits weitgehend entspricht. Sein "idealer" Bewegungsablauf wird ausgeblendet. Durch "Erfahrung" (Unterschreitung definierter Toleranzwerte) "weiß" der Rechner 10 inzwischen, in welchen Punkten der Schüler 22 dazu neigt, von seinem idealen Bewegungsablauf abzuweichen. Diese "kritischen Punkte" werden vom Rechner 10 farblich grell herausgestellt, u.z. solange, bis der tatsächliche Ablauf dem idealen Ablauf entspricht, bzw. ausreichend nahe gekommen ist (Unterschreitung definierter Toleranzwerte).

Mit dieser Trainingsmethode lernt der Schüler 22 sehr schnell und sehr effektiv den idealen Bewegungsablauf für bestimmte Schläge. So vorbereitet, wendet er diese Schläge auf dem realen Spielfeld an mit der Folge, daß er entweder möglichst häufig den idealen Bewegungsablauf eines Schlages durchführt oder aber dem idealen Bewegungsablauf so nahe wie möglich kommt. Die Sicherheit des "Gewußtwie" eines ideal durchgeführten Schlages und die Erfahrung eigenen Könnens wird ihn in die Lage versetzen, die spielerische Verbindung und Anwendung der einzeln geübten und "einprogrammierten" Bewegungsabläufe sehr schnell zu lernen.

Die Erfindung ist nicht auf das Basistraining von Einsteigern beschränkt, sondern folgt dem Können eines Spielers auf beliebiges Spielniveau. Sie bezieht folgende 3 Felder mit ein:

### 1. Basistraining

Ziel dieses Trainings ist die Einübung bestimmter Grundschläge wie Aufschlag, Vorhand und Rückhand, wobei von vornherein der ideale Bewegungsablauf trainiert wird. Selbst mit dieser sehr effektiven Trainingsmethode wird es einige Zeit dauern, bis der Schüler 22 seine Idealbewegung "gefunden" hat. Diese zu finden und einzutrainieren wird geraume Zeit Herausforderung bleiben.

### 2. Fortgeschrittenes Training

Der fortgeschrittene Spieler 22 hat Gelegenheit, sich weitere Standardschläge anzutrainieren, bis er auch diese "Standardschläge" beherrscht.

Zu jedem beliebigen Zeitpunkt kann und soll der Spieler 22 die mit dieser Methode eingeübten Schläge in realiter, also auf einem echten Spielfeld, weitertrainieren. Dabei kommt es darauf an, die eingeübten Schläge in einen realen Spielablauf zu übertragen und in den Spielfluß zu integrieren.

### 3. Spitzentraining

Die besondere Herausforderung und der Vorteil dieser Erfindung besteht u.a. darin, dem Spieler 22 darüber hinaus Gelegenheit zu geben, sich an Schlägen zu üben, die er bisher noch nie durchgeführt hat. Diese Schläge auszuprobieren und zu trainieren, wird immerwährende Herausforderung bleiben.

Grundgedanke dieser letztgenannten Herausforderung besteht darin, daß die meisten Tennisspieler genug damit zu tun haben, bestimmte "Standardschläge" zu üben. Da diese einen unterschiedlichen Schwierigkeitsgrad haben, wird der konventionell trainierte Spieler 22 einige davon, deren Schwierigkeitsgrad nur gering ist, im Laufe der Zeit perfektionieren, und andere, die schwieriger sind und im Spielverlauf seltener vorkommen, nur noch leidlich beherrschen. Es gibt aber noch weitere, theoretisch denkbare Schläge, die nie ausgeführt werden, weil der Spieler 22 keine Ahnung hat, wie er sie ausführen müßte und deswegen auch nie Gelegenheit sucht, sie zu üben:

Diese Schläge läßt er zunächst in seiner Vorstellung ablaufen und gibt dann dem Rechner 10 bestimmte Parameter dieses Schlages ein, z.B. eigener Standort, gewünschter Aufsetzpunkt des Balles 21 und gewünschter Absprungwinkel etc. Der Rechner 10 errechnet daraus die dazu erforderliche Flugbahn und Bewegung des Balles 21 und stellt dar, wie sich der Spieler 22 bewegen müßte, um den Ball 21 auf genau diese Flugbahn zu lenken. Aufgabe des Spielers 22 besteht jetzt darin, diese Bewegung in realiter ablaufen zu lassen und sich dabei vom Rechner 10 beobachten, vergleichen und korrigieren zu lassen, solange, bis er den idealen Bewegungsablauf verstanden und eingeübt hat (weiter s.o.). Auf diese Weise kann sich der Spieler 22 fast beliebig viele, kreative und schwierige Schläge antrainieren. Es sind ihm fast keine Grenzen gesetzt. im Gegensatz zu traditionellen Trainingsmethode hat diese Methode dabei den Vorteil, den Spieler 22 keine Schläge üben zu lassen, die unsinnig, theoretisch nicht möglich oder gesundheitlich bedenklich sind, wohl aber Schläge, die theoretisch denkbar, kinematisch realisierbar und gesundheitlich unbedenklich oder sogar erstrebenswert sind.

Einmal richtig programmiert, sind die Möglichkeiten des Rechners 10 fast unbegrenzt. Durch fortlaufende Überwachung des Spielers 22 kann er z.B. den Konditionsstatus des Spielers 22 genau feststellen und bei Defiziten Konditionierungshinweise geben oder auch Warnung vor drohender Überlastung.

In einem weiteren Schritt kann die Erfindung dazu verwendet werden, in einer virtuellen Umwelt ein tatsächliches Tennismatch durchzuführen. Dazu hat der Spieler 22 wieder seine Maske 24 auf, trägt Datenhandschuhe 28 und Datenschuhe 30 und verwendet einen speziellen Schläger 38.

In seiner Cyberspacemaskte 24 befindet er sich selbst in situ auf einem virtuellen Spielfeld. Er sieht also vor sich das Spielfeld und den Gegner. Seine eigene Spielfläche entspricht der Größe eines normalen Halbfeldes, um ihm alle erforderliche Bewegungsfreiheit zu geben.

Alternativ ist auch ein Minimalfeld vorgesehen, auf dem der Spieler 22 nur minimale Bewegungen ausführt, die vom Rechner 10 auf das virtuelle Spielfeld so übertragen werden, als würde der Spieler 22 weit ausholende Bewegungen machen. Ziel dieser Erfindung ist aber nicht, den Sport zu minimalisieren, sondern mit dieser Spielmethode die Spielfreude zu steigern und die körperlich sportliche Leistung zu fördern und zu optimieren.

Der Spieler 22 spielt jetzt virtuell gegen einen Gegner. Diese Spielform hat folgende Vorteile gegenüber der Realität:
- der Spieler 22 kann sich wahlweise von seinem Gegner die Bälle 21 exakt so zurückspielen lassen, wie er sie plaziert haben möchte, z.B. um bestimmte Schläge immer wieder zu üben.
- die Spielstärke des Gegners ist beliebig einstellbar, so daß eine beliebig große Herausforderung eingestellt werden kann.
- über die im Rechner 10 eingespeicherten kinematischen und anthropometrischen Kenngrößen bestimmter Individuen, kann der Spieler 22 gegen ganz bestimmte Personen trainieren und deren Spielstärke beliebig manipulieren.
- auch ein Spiel gegen sich selbst ist möglich mit dem Vorteil, sich selbst aus der Sicht des Gegners zu sehen und damit die für ihn erkennbaren Schwächen zu identifizieren und zu eliminieren.
- die Umwelt des Spielfeldes ist beliebig veränderbar hinsichtlich z.B. Sonnenstand (Blendung), Windeinfluß, Helligkeit, Bodenbeschaffenheit (Sand, Rasen, Teppich) etc.
- Parameter wie Schlägerhärte, -bespannung, Ballhärte, Balloberfläche etc. sind beliebig einstellbar. Der Spieler 22 kann damit auf einfache Weise seine optimalen Sportgeräte wie Ball 21 und Schläger 38 ausprobieren, bevor er sie sich für das Spiel auf einem realen Spielfeld kauft.

Die erfindungsgemäße Trainingsvorrichtung kann jederzeit und ganzjährig benutzt werden, kennt keine Wetterabhängigkeit, keine Platzbeschränkung, keinen fehlenden Spielpartner und keine Einschränkung durch Erzeugung von Nachbarschaftslärm.

Die erfindungsgemäße Trainingsvorrichtung ermöglicht ein didaktisch optimal aufgebautes Training mit entsprechend schnellem Trainingserfolg, was die Freude am Tennisspielen sehr beflügeln wird, die Erreichung einer Spielstärke, die konventionell trainiert für den Durchschnittsspieler im allgemeinen nicht erreichbar ist, die Eröffnung einer neuen Spielkreativität durch Anwendung von Schlägen, die durch ihre Komplexität für den Durchschnittsspieler konventionell nicht erlernbar sind, die Optimierung der körperlichen Kondition des Spielers 22 durch kontinuierliche Überwachung seines konditionellen Status, eine wirtschaftlichere Nutzung eines Großteils der vorhandenen Spielfelder durch Halbierung des Flächenbedarfs und die Einbeziehung weiterer Zielgruppen in diese Sportart, da über die Betrachtung der eigenen virtuell dargestellten Bewegungsabläufe und ihrer didaktisch optimal dargestellten Beobachtungs- und Korrekturmöglichkeit auch relativ "unsportlich" und "untrainierte" Menschen trainieren können. Hinzu kommt, daß durch die Einstellbarkeit der Spielstärke des Gegners immer und zu jeder Zeit ein entsprechender Sparringspartner zur Verfügung steht.

## Patentansprüche

1. Trainingsvorrichtung (100) zum Trainieren des Bewegungsablaufes einer Person (22) bei der Handhabung eines von der Person (22) in vorbestimmter Weise zu bewegenden Gegenstandes (38), enthaltend
- eine Datenverarbeitungsanlage (10),
- mit der Datenverarbeitungsanlage (10) verbundene und an der Person (22) angeordnete erste Sensoren (28,30), welche erste Daten bezüglich der Bewegung der Person (22) an die Datenverarbeitungsanlage (10) übermitteln,
- mit der Datenverarbeitungsanlage (10) verbundene und am Gegenstand (38) angeordnete zweite Sensoren (40), welche zweite Daten bezüglich der Bewegung des Gegenstandes (38) an die Datenverarbeitungsanlage (10) übermitteln,
- ein mit der Datenverarbeitungsanlage (10) verbundenes Anzeigemittel (26) und
- einen Speicher (12) für Referenzdaten,
wobei die Datenverarbeitungsanlage (10) derart ausgebildet ist, daß sie aus den Referenzdaten einen idealen Bewegungsablauf von Körper und Gegenstand (38) errechnet und wahlweise
(a) den idealen Bewegungsablauf im Anzeigemittel (26) darstellt oder
(b) den idealen Bewegungsablauf mit einem Bewegungsablauf vergleicht, welcher sich aus den ersten und zweiten Daten der ersten und zweiten Sensoren (28,30,40) ergibt, oder
(c) gleichzeitig den idealen Bewegungsablauf und den mittels der ersten und zweiten Sensoren (28,30,40) detektierten Bewegungsablauf im Anzeigemittel (26) darstellt,
**gekennzeichnet durch**
mit der Datenverarbeitungsanlage (10) verbundene und am Gegenstand (38) angeordnete mechanische Betätigungsmittel (42), welche von der Datenverarbeitungsanlage (10) angesteuert betätigt eine Berührung mit einem virtuellen Gegenstand (21) als taktile Rückmeldung an die Person (22) simulieren
und **durch** eine Anordnung der Anzeigemittel (26) an der Person (22).

2. Trainingsvorrichtung (100) nach Anspruch 1,
**dadurch gekennzeichnet,**
**daß** die Datenverarbeitungsanlage (10) ferner derart ausgebildet ist, daß sie aus den Referenzdaten und den ersten und zweiten Daten eine Bewegungstrajektorie des virtuellen Gegenstandes (21) im Raum errechnet und auf dem Anzeigemittel (26) darstellt.

3. Trainingsvorrichtung (100) nach Anspruch 1 oder 2,
**dadurch gekennzeichnet,**
**daß** der Gegenstand (38) ein Sportgerät, z.B. ein Tennisschläger, ein Badmintonschläger, ein Tischtennisschläger, ein Squashschläger, ein Golfschläger, ein Baseballschläger, ein Wurfhammer, ein Hockeyschläger, ein Ballschläger, ein Speer, Skier, Snowboard, Skates ist.

4. Trainingsvorrichtung (100) nach einem der Ansprüche 1 bis 3,
**dadurch gekennzeichnet,**
**daß** der Gegenstand (38) ein Schwert, ein Schläger, ein Degen, ein Florett, eine Axt, eine Verteidigungswaffe ist.

5. Trainingsvorrichtung (100) nach einem der Ansprüche 1 bis 4,
**dadurch gekennzeichnet,**
**daß** der virtuelle Gegenstand (21) ein Ball oder eine virtuelle Person und/oder ein von der virtuellen Person geführter virtueller Gegenstand ist.

6. Trainingsvorrichtung (100) nach einem der Ansprüche 1 bis 5,
**dadurch gekennzeichnet,**
**daß** die ersten Sensoren (28,30) Datenhandschuhe (28) und/oder Datenschuhe (30) sind.

7. Trainingsvorrichtung (100) nach einem der Ansprüche 1 bis 6,
**dadurch gekennzeichnet,**
**daß** das Anzeigemittel (26) ein Bildschirm ist.

8. Trainingsvorrichtung (100) nach einem der Ansprüche 1 bis 7,
**dadurch gekennzeichnet,**
**daß** das Anzeigemittel (26) in einen am Kopf der Person (22) angeordneten Helm (24) oder Haube integriert ist.

9. Trainingsvorrichtung (100) nach einem der Ansprüche 1 bis 8,
**dadurch gekennzeichnet,**
**daß** die Referenzdaten anthropometrische Maße und/oder kinematische Parameter des Körpers einer Durchschnittsperson umfassen und der ideale Bewegungsablauf auf der Grundlage dieser Daten bestimmt ist.

10. Trainingsvorrichtung (100) nach einem der Ansprüche 1 bis 9,
**dadurch gekennzeichnet,**
**daß** die Referenzdaten anthropometrische Maße und/oder kinematische Parameter der Person (22) umfassen und der ideale Bewegungsablauf auf der Grundlage dieser Daten bestimmt ist.

11. Trainingsvorrichtung (100) nach einem der Ansprüche 1 bis 10,
**dadurch gekennzeichnet,**
**daß** die Referenzdaten statische und dynamische Eigenschaften des Gegenstandes (38) umfassen.

12. Trainingsvorrichtung (100) nach einem der Ansprüche 1 bis 11,
**dadurch gekennzeichnet,**
**daß** die Referenzdaten Maße eines Spielfeldes, eine Netzhöhe, eine Netzbreite, eine Oberflächenbeschaffenheit eines Platzes, wie beispielsweise eines Sandes, Rasens oder Teppichs umfassen.

13. Trainingsvorrichtung (100) nach einem der Ansprüche 1 bis 12,
**dadurch gekennzeichnet,**
**daß** im Fall (c) die Datenverarbeitungsanlage (10) derart ausgebildet ist, daß Abweichungen des von den ersten und zweiten Sensoren (28,30,40) erfaßten Bewegungsablaufes vom idealen Bewegungsablauf in der Anzeigevorrichtung (26) visuell, beispielsweise farblich, hervorgehoben sind.

14. Trainingsvorrichtung (100) nach einem der Ansprüche 1 bis 13,
**dadurch gekennzeichnet,**
**daß** im Fall (b) die Datenverarbeitungsanlage (10) derart ausgebildet ist, daß aus dem Vergleich der Bewegungsabläufe Daten hervorgehen, welche Abweichungen zwischen den Bewegungsabläufen entsprechen.

15. Trainingsvorrichtung (100) nach einem der Ansprüche 1 bis 14,
**dadurch gekennzeichnet,**
**daß** zwei mit der Datenverarbeitungsanlage (10) verbundene und von dieser gesteuerte Laser (14,16) vorgesehen sind, deren Kreuzungspunkt ihrer Laserstrahlen (18,20) dem Ort im Raum des virtuellen Gegenstandes (21) entsprechen.

16. Trainingsvorrichtung (100) nach einem der Ansprüche 1 bis 15,
**dadurch gekennzeichnet,**
**daß** mehrere virtuelle Gegenstände (21) vorgesehen sind, wobei jedem virtuellen Gegenstand (21) zwei Laserstrahlen (18,20) zugeordnet sind und der jeweilige Kreuzungspunkt zweier Laserstrahlen (18,20) einem Ort im Raum des jeweiligen virtuellen Gegenstandes (21) entsprechen.

## Claims

1. A training device (100) for training the course of movement of a person (22) by manipulating an object (38) to be moved by the person (22) in a predetermined manner, comprising
- a data processing unit (10),
- first sensors (28, 30) connected with the data processing unit (10) and placed on the person (22) which transmit first data in connection with the movement of the person (22) to the data processing unit (10),
- second sensors (40) connected with the data processing unit (10) and placed on the object (38) which transmit second data in connection with the movement of the object (38) to the data processing unit (10),
- an indicating means (26) connected with the data processing unit (10) and
- a memory (12) for reference data,
whereby the data processing unit (10) is constructed in such a way that it calculates an ideal course of movement of body and object (38) from the reference data and alternatively
(a) represents the ideal course of movement in the indicating means or
(b) compares the ideal course of movement with a course of movement which results from the first and second data of the first and second sensors (28, 30, 40) or
(c) simultaneously represents in the indicating means (26) the ideal course of movement and the course of movement detected by means of the first and second sensors (28, 30, 40),
**characterized by**
mechanical actuating means (42), connected with the data processing unit (10) and placed on the object (38) which, actuated triggered by the data processing unit (10), simulate a contact with a virtual object (21) as a tactile feedback to the person (22) and
by an arrangement of the indicating means (26) on the person (22).

2. A training device (100) according to claim 1,
**characterized in**
**that** the data processing unit (10) furthermore is constructed in such a way that, from the reference data and the first and second data, it calculates a movement trajectory of the virtual object (21) in space and represents it on the indicating means (26).

3. A training device (100) according to claim 1 or 2,
**characterized in**
**that** the object (38) is a sports apparatus, for example a tennis racket, a badminton racket, a table tennis racket, a squash racket, a golf club, a baseball bat, a throwing hammer, a hockey stick, a ball racket, a javelin, skis, a snowboard, skates.

4. A training device (100) according to any of the claims 1 to 3,
**characterized in**
**that** the object (38) is a javelin, a racket, an epee, a foil, an axe, a defensive weapon.

5. A training device (100) according to any of the claims 1 to 4,
**characterized in**
**that** the virtual object (21) is a ball or a virtual person and/or a virtual object led by the virtual person.

6. A training device (100) according to any of the claims 1 to 5,
**characterized in**
**that** the first sensors (28, 30) are data gloves (28) and/or data shoes (30).

7. A training device (100) according to any of the claims 1 to 6,
**characterized in**
**that** the indicating means (26) is a display.

8. A training device (100) according to any of the claims 1 to 7,
**characterized in**
**that** the indicating means (26) is integrated into a helmet (24) or a cap placed on the head of the person (22).

9. A training device (100) according to any of the claims 1 to 8,
**characterized in**
**that** the reference data comprise anthropometric measures and/or kinematic parameters of the body of an average person and the ideal course of movement is determined on the base of these data.

10. A training device (100) according to any of the claims 1 to 9,
**characterized in**
**that** the reference data comprise anthropometric measures and/or kinematic parameters of the person (22) and the ideal course of movement is determined on the base of these data.

11. A training device (100) according to any of the claims 1 to 10,
**characterized in**
**that** the reference data comprise static and dynamic properties of the object (38).

12. A training device (100) according to any of the claims 1 to 11,
**characterized in**
**that** the reference data comprise dimensions of a court, a net height, a net width, a surface structure of a place such as, for example of a sand, a lawn or a carpet.

13. A training device (100) according to any of the claims 1 to 12,
**characterized in**
**that**, in case (c) the data processing unit (10) is constructed in such a way that divergences of the course of movement detected by the first and second sensors (28, 30, 40) from the ideal course of movement are visually stressed in the indicating device (26), for example in colour.

14. A training device (100) according to any of the claims 1 to 13,
**characterized in**
**that**, in case (b) the data processing unit (10) is constructed in such a way that, from the comparison of the courses of movement, there emerge data which correspond to divergences between the courses of movement.

15. A training device (100) according to any of the claims 1 to 14,
**characterized in**
**that** two lasers (14, 16) connected with the data processing unit (10) and controlled by the data processing unit are provided for, the crossing point of their laser beams (18, 20) corresponding to the place in space of the virtual object (21).

16. A training device (100) according to any of the claims 1 to 15,
**characterized in**
**that** several virtual objects (21) are provided for, two laser beams (18, 20) being assigned to each virtual object (21) and the respective crossing point of two laser beams (18, 20) corresponding to a place in space of the respective virtual object (21).

## Revendications

1. Appareil d'entraînement (100) pour l'entraînement du déroulement du déplacement d'une personne (22) lors du maniement d'un objet (38) à déplacer par la personne (22) d'une manière prédéterminée,
comprenant
- une installation de traitement de données (10),
- des premiers détecteurs (28, 30), reliés à l'installation de traitement de données (10) et placés sur la personne (22), qui transmettent des premières données concernant le déplacement de la personne (22) à l'installation de traitement de données (10),
- des seconds détecteurs (40), reliés à l'installation de traitement de données (10) et placés sur l'objet (38), qui transmettent des secondes données concernant le déplacement de l'objet (38) à l'installation de traitement de données (10),
- un moyen d'affichage (26) relié à l'installation de traitement de données (10) et
- une mémoire (12) pour des données de référence,
l'installation de traitement de données (10) étant configurée telle qu'elle calcule, à partir des données de référence, un déroulement idéal du déplacement du corps et de l'objet (38) et au choix
(a) représente le déroulement idéal du déplacement dans le moyen d'affichage (26) ou
(b) compare le déroulement idéal du déplacement avec un déroulement de déplacement qui résulte des premières et des secondes données des premiers et des seconds détecteurs (28, 30, 40) ou
(c) représente simultanément le déroulement idéal du déplacement et le déroulement du déplacement détecté au moyen des premiers et des seconds détecteurs (28, 30, 40) dans le moyen d'affichage (26),
**caractérisé par**
des moyens d'actionnement mécaniques (42), reliés à l'installation de traitement de données (10) et placés sur l'objet (38), qui, actionnés en étant excités par l'installation de traitement de données (10), simulent un contact avec un objet virtuel (21) comme confirmation tactile pour la personne (22)
et par un placement des moyens d'affichage (26) sur la personne (22).

2. Appareil d'entraînement (100) selon la revendication 1,
**caractérisé en ce**
**que** l'installation de traitement de données (10) est de plus configurée telle qu'elle calcule une trajectoire de déplacement de l'objet virtuel (21) dans l'espace à partir des données de référence et des premières et des secondes données et la représente sur le moyen d'affichage (26).

3. Appareil d'entraînement (100) selon la revendication 1 ou 2,
**caractérisé en ce**
**que** l'objet (38) est un équipement de sport, par exemple une raquette de tennis, une raquette de badminton, une raquette de ping-pong, une raquette de squash, un club de golf, une batte de baseball, un marteau, une canne de hockey, une raquette pour balle, un javelot, des skis, un snowboard, des patins.

4. Appareil d'entraînement (100) selon l'une des revendications 1 à 3,
**caractérisé en ce**
**que** l'objet (38) est une épée, un sabre, un fleuret, une hache, une arme de défense.

5. Appareil d'entraînement (100) selon l'une des revendications 1 à 4,
**caractérisé en ce**
**que** l'objet virtuel (21) est une balle ou une personne virtuelle et/ou un objet virtuel mené par la personne virtuelle.

6. Appareil d'entraînement (100) selon l'une des revendications 1 à 5,
**caractérisé en ce**
**que** les premiers détecteurs (28, 30) sont des gants de données (28) et/ou des chaussures de données (30).

7. Appareil d'entraînement (100) selon l'une des revendications 1 à 6,
**caractérisé en ce**
**que** le moyen d'affichage (26) est un écran.

8. Appareil d'entraînement (100) selon l'une des revendications 1 à 7,
**caractérisé en ce**
**que** le moyen d'affichage (26) est intégré dans un casque (24) ou une calotte placée sur la tête de la personne (22).

9. Appareil d'entraînement (100) selon l'une des revendications 1 à 8,
**caractérisé en ce**
**que** les données de référence comprennent des dimensions anthropométriques et/ou des paramètres cinématiques du corps d'une personne moyenne et le déroulement idéal du déplacement est défini sur la base de ces données.

10. Appareil d'entraînement (100) selon l'une des revendications 1 à 9,
**caractérisé en ce**
**que** les données de référence comprennent des dimensions anthropométriques et/ou des paramètres cinématiques de la personne (22) et le déroulement idéal du déplacement est défini sur la base de ces données.

11. Appareil d'entraînement (100) selon l'une des revendications 1 à 10,
**caractérisé en ce**
**que** les données de référence comprennent des propriétés statiques et dynamiques de l'objet (38).

12. Appareil d'entraînement (100) selon l'une des revendications 1 à 11,
**caractérisé en ce**
**que** les données de référence comprennent les dimensions d'un terrain, une hauteur de filet, une largeur de filet, une structure de surface d'un terrain comme, par exemple, d'un sable, d'un gazon ou d'un tapis.

13. Appareil d'entraînement (100) selon l'une des revendications 1 à 12,
**caractérisé en ce**
**que** dans le cas (c) l'installation de traitement de données (10) est configurée telle que des divergences du déroulement du déplacement détecté par les premiers et les seconds détecteurs (28, 30, 40) par rapport au déroulement idéal du déplacement sont mises en évidence visuellement dans le dispositif d'affichage (26), par exemple en couleur.

14. Appareil d'entraînement (100) selon l'une des revendications 1 à 13,
**caractérisé en ce**
**que** dans le cas (b) l'installation de traitement de données (10) est configurée telle qu'il ressort de la comparaison des déroulements de déplacements des données qui correspondent aux divergences entre les déroulements de déplacements.

15. Appareil d'entraînement (100) selon l'une des revendications 1 à 14,
**caractérisé en ce**
**que** deux lasers (14, 16) reliés à l'installation de traitement de données (10) et commandés par celle-ci sont prévus dont le point d'intersection de leurs faisceaux laser (18, 20) correspond à l'endroit dans l'espace de l'objet virtuel (21).

16. Appareil d'entraînement (100) selon l'une des revendications 1 à 15,
**caractérisé en ce**
**que** plusieurs objets virtuels (21) sont prévus, deux faisceaux laser (18, 20) étant affectés à chaque objet virtuel (21) et le point d'intersection respectif de deux faisceaux laser (18, 20) correspond à un endroit dans l'espacé de l'objet virtuel respectif (21).
